# EUROPEAN PATENT SPECIFICATION

(11) **EP 3 988 805 B1**
(45) Date of publication and mention of the grant of the patent: **10.07.2024**
(21) Application number: 21202434.3
(22) Date of filing: 13.10.2021
(51) Int. Cl.: F16B 39/00, B62K 23/06, B62L 3/02

(54) **ANTI-UNSCREWING DEVICE FOR A MANUAL ADJUSTMENT FOR BICYCLES, MOTORCYCLES**
AUSSCHRAUBSICHERUNG FÜR EINE MANUELLE EINSTELLUNG VON FAHRRÄDERN, MOTORRÄDERN
DISPOSITIF ANTI-DEVISSAGE D'UN REGLAGE MANUEL DE BICYCLETTES, MOTOCYCLETTES

(30) Priority: 20.10.2020 IT 202000024715
(43) Date of publication of application: 27.04.2022
(73) Proprietor: FORMULA SRL, 59100 Prato (PO) (IT)
(72) Inventor: LAGHI, SAMUELE, 59024 Vernio - Prato (IT)
(74) Representative: Nesti, Antonio

(56) References cited:
- WO-A1-2019/098688
- CN-A- 105 090 208
- CN-A- 111 207 147
- IT-A1- FI20 090 264
- US-B2- 10 501 144

## Description

### Field of the Invention

The invention relates to an anti-unscrewing device for a manual manoeuvre adjustment of bicycles and the like, such as of brakes, suspensions, clutches, etc.

In general, the invention relates to an indexed anti-unscrewing manual adjustment, i.e., which allows the user to make a stable adjustment of the manoeuvre, receiving a return indication, for example tactile, of the width the adjustment made.

### Background art

Anti-unscrewing devices are currently known, for example for the hydraulic brakes of bicycles of the type comprising an adjustable control lever of a hydraulic piston by means of a threaded thrust stem called a "pushrod" free to rotate about the axis thereof and constrained to the lever by means of an internally threaded and axially movable intermediate element in an adjustable manner with respect to the stem. In these systems, to change the position of the lever it is sufficient to rotate the stem so that the intermediate element, called a "barrel", slides along the stem moving the adjustment point of the lever. An example of such adjustments is described in patent application FI2009A000264 which relates to a mechanism for adjusting the lever position which includes an elastic element which in use is compressed between longitudinal flattenings of the stem, for example two opposite flattenings, and a transverse hole of the barrel so as to deform and repeatedly return to the initial configuration during the rotation of the stem at the flattenings, thus stabilizing the position of the stem and also providing the user with an indication of the width of the rotation made by the stem and therefore of the adjustment of the lever position.

A further example of manual adjustment is shown in US10501144 where the anti-unscrewing and indexing effect is provided by a metal clip constrained to the barrel and resting on the longitudinal flattenings to deform and return to the initial configuration during the rotation of the stem. Document CN111207147A shows the preamble of claim 1.

However, the known type of adjustments have limitations and drawbacks due to the relative complexity of the mechanism during maintenance or when it is necessary to disassemble the manual manoeuvre associated with the device. Moreover, the current systems sometimes have poorly perceptible indexing clicks or are hard to operate.

The need is therefore felt for an anti-unscrewing adjustment for a manual manoeuvre of bicycles and the like, free of the drawbacks of the known type of systems.

### Object of the Invention

Therefore, the object of the present invention is to propose an anti-unscrewing manual adjustment device associated with the manoeuvres of bicycles, motorcycles and the like which allows the adjustment to be made in a simple and reliable manner, also providing the user with a clear return sensation of the adjustment and simultaneously allowing an easy maintenance and installation of the device.

### Summary of the invention

These and other objects have been achieved with a device according to one or more of the attached claims, in which the anti-unscrewing mechanism comprises a magnetic element which in use is normally in contact by magnetic attraction against a surface of the device, while during the screwing/unscrewing, the device is forced to move in opposition to the magnetic attraction against the screwing/unscrewing movement.

A first advantage of the invention is that the device has reliable operation and provides a clear indication of the return of the adjustment made.

A further advantage is that both the shape of the device and the assembly/disassembly steps are simplified, it being sufficient to wash the device and apply a small amount of oil to bring it back to "new" conditions.

A further advantage is that the proposed solution is particularly low-cost since there is no need for moulds for the manufacture of the components.

### List of Drawings

These and other advantages will be better understood by anyone skilled in the art from the description below and the accompanying drawings, given as nonlimiting example, in which:
- figures 1 and 1a-1c respectively show an exploded view, an open-section perspective view, a plan view of the section of fig.1a and a partial open-section plan view of the device of the invention;
- figure 2 shows an exploded view of a preferred embodiment of the adjustment device;
- figure 3 shows a perspective view of a manual-lever hydraulic brake for bicycles and the like provided with an adjustment device of the lever rest position according to the invention;
- figures 4 and 4a respectively show a plan view of the lever of fig.3 and a sectional view A-A of the brake of fig.4;
- figure 5 shows a detail of the lever detached from the brake and provided with the device of the invention;
- figure 6 shows an exploded view of the hydraulic brake for bicycles of fig. 3;
- figures 7a, 7b show a further preferred embodiment of the invention.

### Detailed description

With reference to the accompanying drawings, an anti-unscrewing device is described for a manual manoeuvre adjustment 8 of bicycles, motorcycles and the like functionally associated with the device..

By way of non-exhaustive example, the device may be associated with adjustable manoeuvre such as brakes, suspensions, clutches and in general functional assemblies which in use must allow the user to make an adjustment, preferably an indexed adjustment.

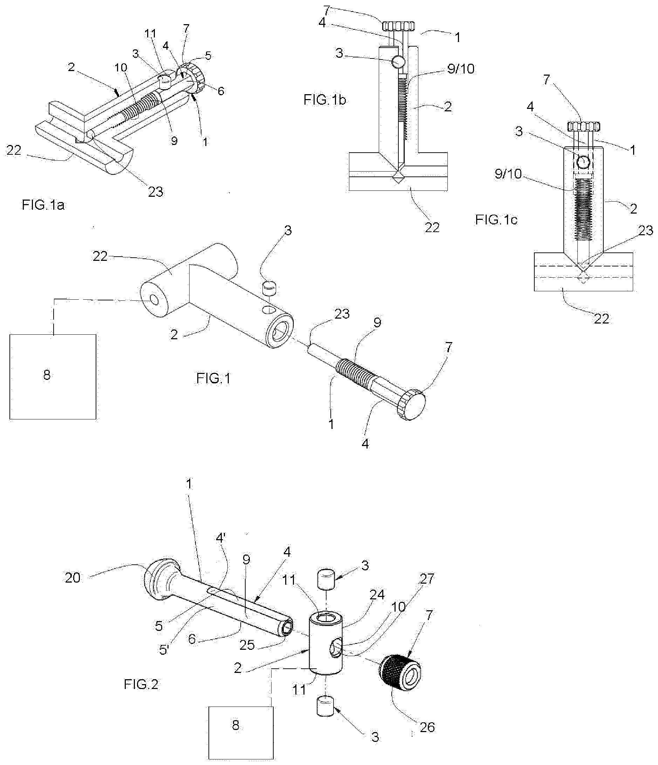

In the embodiment shown in figure 1, the device comprises a first element 1 in threaded coupling with a second element 2 and which can rotate with respect to the latter by manually activating a control 7, e.g., a knob, to perform an adjustment movement of the manual manoeuvre adjustment associated with the device.

The device further comprises a stabilizing element 3 associated with the first and the second element which is normally held in contact by magnetic attraction against a surface 4 of the first element 1 in a stable adjustment configuration of the device, for example in the configuration corresponding to an adjustment point decided by the user.

According to the invention, during the screwing/unscrewing of the device, the stabilizing element 3 is forced by the contact with the surface 4 to move in opposition to the magnetic attraction against the screwing/unscrewing movement, thus exerting an anti-unscrewing stabilizing function.

It is understood that in order to obtain the desired effect it will be possible to include the magnetization of one or both of the stabilizing element 3 and the first element 1 of the device.

Preferably, the contact surface 4 comprises a plurality of contact portions 5, 6 corresponding to respective adjustment positions of the device, so that during the screwing/unscrewing movement the magnetic element 3 can subsequently pass in contact with said plurality of contact portions 5, 6 returning a tactile sensation of performing the adjustment to the control 7, useful for example to index the adjustment position obtained or to allow the user to exactly know the extent of the adjustment made.

In a preferred example, the first element 1 comprises a stem 1 with manual control 7 provided with at least a first threaded outer portion 9 and contact portions in the form of peripheral flattenings 5, 6 of the stem itself, obtained a position which may be axially distinct from the position of the thread 9 or at least coincident therewith.

In this case, the second element 2 comprises a respective cylindrical body provided with at least a second threaded inner portion 10 corresponding to the thread 9 of the stem, to be screwed/unscrewed and slide axially with respect to the stem 1 itself.

Furthermore, the magnetic element 3 comprises a magnetic block in contact with the outer surface 4 of the stem 1 which can move in a sliding seat 11 obtained in the cylindrical body 2 during the screwing/unscrewing of the device. In a first example of application, schematically depicted by figures 1a-1c, the adjustment of the manual manoeuvre adjustment 8 is associated or functionally dependent on the useful passage section of a fluid in a piping 22, which depends on and is adjusted by the position assumed by one end 23 of the element 1, so that when screwing/unscrewing the device, the end 23 occupies a more or less extended portion of the passage section and therefore modifies the flow rate of fluid transported by the piping, for example in hydraulic-type manual manoeuvre adjustment.

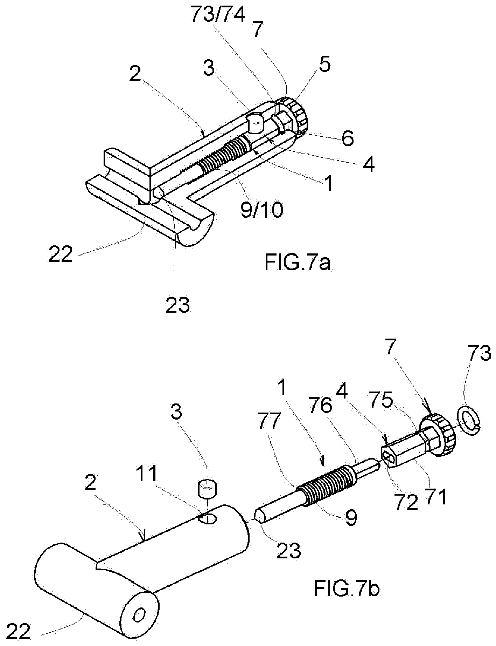

Figures 7a, 7b show a preferred embodiment of the device of fig.1a, in which the first element 1 is made in two mutually sliding parts 71, 77 by means of an impeded rotation coupling, formed for example by a prismatic guide comprising a plug 76 of the second part 77 sliding in a hollow 72 of the first part 71.

In this embodiment, the first part 71 is in the form of a hollow cylinder integral with the control 7 and is provided with the contact surface 4 with the stabilizing element, while the second part 77 is in the form of a stem provided with the thread 9 intended to engage with the thread 10 of the second element 2 to determine an axial adjustment movement of the stem 77.

With this solution, the rotation of the surface 4 and the axial sliding of the stem 77 are decoupled, so that the rotation of the control 7 determines, by means of the guide 76/72, the screwing/unscrewing of the device and the consequent adjustment of the manual manoeuvre adjustment associated therewith, stabilized by the action of the stabilizing element 3, but does not change the axial position of the control 7.

In a further application example, the regulation of the manual manoeuvre adjustment 8 is associated with the mutual position assumed by said first and second element 1, 2, so that the displacement of one of the two elements of the device determines an adjustment variation.

Fig. 2 shows an example of adjustment depending on the mutual position of the first and second elements of the device, consisting in this example of a threaded stem on which a transverse cylindrical body can slide, as will be better described below.

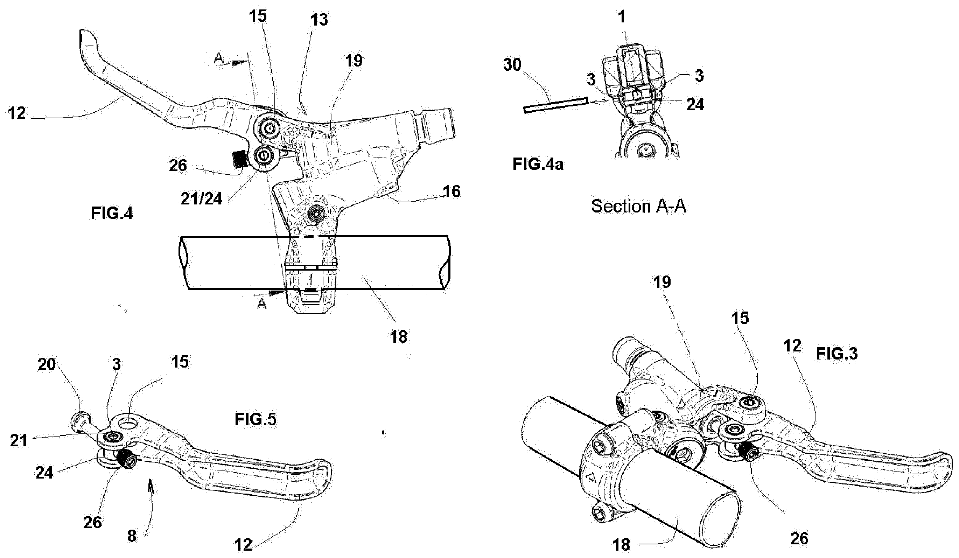

Figures 3-6 show a preferred example of application of the device of figure 2, in which the manual manoeuvre adjustment 8 comprises an adjustable manual lever 12 for controlling a hydraulic actuator 13 comprising a main body 16 applicable to a handlebar 18, for example by means of a collar 28, and a hydraulic pump housed inside the body 16 provided with a hydraulic piston 19 operatively associated with the lever 12.

In more detail, the lever 12 is an adjustable lever rotatably constrained around a pin 15 of the main body 16 retained by respective seats 30, 31 of the body 16 and of the lever 12, to pass from an initial rest position and an operating control position of the piston 19 of the actuator 13.

In the example shown, the stem 1 comprises a first thrust end 20 connected with axial constraint and freely rotating with the piston 19 and a second control end 25 intended to engage, preferably removably, with a rotating control knob 26 while the cylindrical body 2 comprises a cylindrical barrel 24 transversely crossed by said stem 1 through a transverse hole 27 and inserted in a cylindrical seat 21 of the lever 12 of axis parallel to the rotation axis of the pin 15.

In this embodiment, the magnetic element comprises two magnetic blocks 3 inserted in corresponding sliding seats 11 obtained in a diametrically opposite position with respect to the axis of the stem 1 and magnetized with opposite signs in order to attract each other and normally hold resting on the contact surfaces 5, 6 consisting of opposite flattenings or grooves of the stem 1, placed at a lower radial distance and retracted with respect to the adjacent portions 4', 5' of the outer surface 4 of the stem 1, placed in a more radially protruding position.

In operation, the lever 12, when stowed, is in a position determined by the position of the barrel along the stem 1, with the blocks 3 attracting each other in a stable position on the flattenings 5, 6 of the stem.

To change the position of the lever 12 and thus adjust the kinematic configuration thereof according to the user's preference, the user can rotate the knob 26 causing the rotation of the portion 20 of the stem 1 and the axial displacement of the barrel which will drag the lever 12 in the movement thereof, rotating it on the pin 15 until it occupies the desired position.

During the rotation of the stem 1, the blocks 3 are forced to move away from each other at the radially protruding portions 4', 5' to then rest on the retracted portions 4, 5 and thus at each act of rotation of at least 180°.

Advantageously, the alternating movement of the blocks 3, in opposition to the mutual magnetic attraction, returns a tactile sensation to the knob 26 which provides a clear indication of the rotations performed and therefore of the width of the adjustment.

Advantageously, moreover, the blocks 3 are normally kept inside the seats 21 due to a magnetic effect, but they can easily be extracted with a tool 30, schematically shown in fig.4.formed by a magnetized rod which, when brought closer to the blocks 3, allows the extraction thereof from the seats 21.

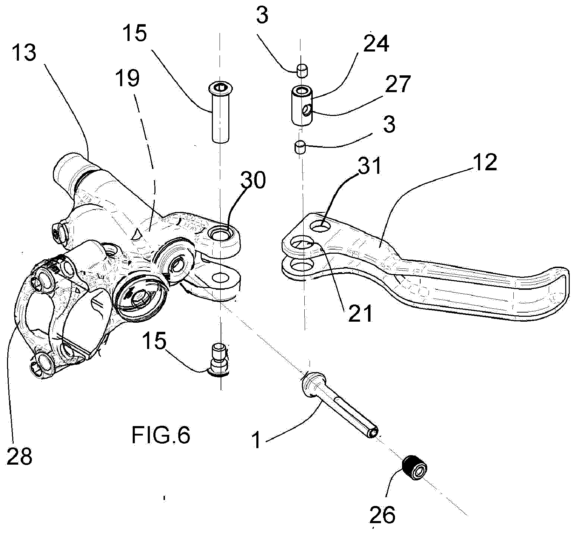

Fig.6 shows the extremely simple construction of the brake provided with the device, which can be assembled simply by inserting the barrel 24 in the hole 21 of the lever 12, the blocks 3 in the seats 11 and the stem 1 in the transverse hole 27 of the barrel, then screwing the control knob 26 on the outer end of the stem.

The present invention has been described according to preferred embodiments; however, equivalent variants can be conceived without departing from the scope of the present invention. The invention is defined by the claims.

## Claims

1. Anti-unscrewing device of a manual manoeuvre adjustment (8) of bicycles or motorcycles functionally associated with the device, comprising:
a first element (1) in threaded coupling with a second element (2) and rotating with respect to the latter with a screwing/unscrewing movement in response to the manual activation of a control (7) to perform an adjustment movement of said manoeuvre adjustment,
a magnetic stabilizing element (3) associated with said first (1) and second element (2), and mobile with respect thereto,
**characterized in that** the magnetic stabilizing element (3), is normally held in contact by magnetic attraction against a surface (4) of the first element (1) in a stable adjustment configuration of the device, while during the screwing/unscrewing of said first (1) and second element (2) of the device the magnetic stabilizing element (3) is forced by said contact with the surface (4) to move in opposition to said magnetic attraction against both the screwing and the unscrewing movement.

2. Device according to claim 1, wherein said contact surface (4) comprises a plurality of contact portions (5, 6) corresponding to respective adjustment positions of the device.

3. Device according to claim 2, wherein during the screwing/unscrewing movement the magnetic element (3) subsequently passes into contact with said plurality of contact portions (5, 6) performing said movement in opposition to the magnetic attraction so as to return a tactile sensation of execution of the adjustment to the control (7).

4. Device according to one of the preceding claims 2, 3, wherein
said first element (1) comprises a stem (1) with manual control (7) provided with at least one first threaded outer portion (9) and said plurality of contact portions in the form of peripheral flattenings (5, 6) of the stem itself,
said second element (2) comprises a cylindrical body provided with at least one second threaded inner portion (10) to be screwed/unscrewed and slide axially with respect to the stem (1),
said magnetic element (3) comprises a magnetic block in contact with the contact surface (4) of the stem (1) and movable in a sliding seat (11) obtained in the cylindrical body (2).

5. Device according to claim 4, wherein said stem comprises a first part (71) in the form of a hollow cylinder integral with the control (7) and provided with the contact surface (4) and a second part (77) is in the form of a stem provided with the threaded outer portion (9), said first part (71) and second part (77) being mutually slidable by means of an impeded rotation coupling, so that a rotation of the control (7) determines the screwing/unscrewing of the threaded portion (9) but does not change the axial position of the control (7).

6. Device according to one of the preceding claims, wherein the adjustment of said manoeuvre adjustment (8) is associated with a piping (22) for the passage of a fluid, the useful section of which is adjusted by the position assumed by one end (23) of the element (1).

7. Device according to one of the preceding claims, wherein the adjustment of said manoeuvre adjustment (8) is associated with the mutual position assumed by said first and second element (1, 2).

8. Hydraulic actuator (13) for bicycles or motorcycles comprising a device according to claim 6, wherein said manoeuvre adjustment (8) comprises an adjustable manual lever (12) and the actuator (13) comprises a main body (16) applicable to a handlebar (18) and a hydraulic pump provided with a hydraulic piston (19) operatively associated with the lever (12).

9. Actuator according to claim 8, when dependent on claims 4 or 5, wherein:
said lever (12) is an adjustable lever rotatably constrained around a pin (15) integral with the main body (16) to pass from an initial rest position and an operating control position of the actuator (13),
said stem (1) comprises a first thrust end (20) connected with axial constraint and freely rotating with said piston (19) and a second control end (25) intended to engage with a rotating control knob (26),
said cylindrical body (2) comprises a cylindrical barrel (24) transversely crossed by said stem (1) through a transverse hole (27) and inserted in a cylindrical seat (21) of the lever (12) of axis parallel to the rotation axis of the pin (15).

10. Actuator according to claim 9, comprising two magnetic blocks (3) inserted in corresponding sliding seats (11) obtained in a diametrically opposite position with respect to the axis of the stem and magnetized with opposite signs in order to attract each other and normally hold resting on the contact surfaces (5, 6) of the stem (1).

11. Actuator according to claim 9 or 10, wherein said lever is a brake lever and said pump (19) is a pump for actuating a hydraulic brake.

## Patentansprüche

1. Ausschraubsicherung für eine manuelle Manövriereinstellung (8) für Fahrräder oder Motorräder, die funktionell mit der Vorrichtung verbunden sind, umfassend:
ein erstes Element (1), das mit einem zweiten Element (2) durch Gewinde verbunden ist und sich in Bezug auf letzteres mit einer Einschraub-/Ausschraubbewegung als Reaktion auf die manuelle Aktivierung einer Steuerung (7) dreht, um eine Einstellbewegung der Manövriereinstellung durchzuführen,
ein magnetisches Stabilisierungselement (3), das mit dem ersten (1) und dem zweiten Element (2) verbunden und in Bezug darauf beweglich ist,
**dadurch gekennzeichnet, dass** das magnetische Stabilisierungselement (3) im normalen Betrieb durch magnetische Anziehung in Kontakt mit einer Oberfläche (4) des ersten Elements (1) in einer stabilen Einstellungskonfiguration der Vorrichtung gehalten wird, währenddessen während des Einschraubens/Ausschraubens des ersten (1) und des zweiten Elements (2) der Vorrichtung das magnetische Stabilisierungselement (3) durch den Kontakt mit der Oberfläche (4) gezwungen wird, sich entgegen der magnetischen Anziehung sowohl gegen die Einschraubals auch gegen die Ausschraubbewegung zu bewegen.

2. Vorrichtung nach Anspruch 1, wobei die Kontaktfläche (4) eine Vielzahl von Kontaktabschnitten (5, 6) aufweist, die den jeweiligen Einstellungspositionen der Vorrichtung entsprechen.

3. Vorrichtung nach Anspruch 2, wobei das magnetische Element (3) während der Einschraub-/Ausschraubbewegung anschließend mit der Vielzahl von Kontaktabschnitten (5, 6) in Kontakt kommt, wobei es die Bewegung entgegen der magnetischen Anziehung ausführt, um so der Steuerung (7) ein taktiles Gefühl der Durchführung der Einstellung zurückzugeben.

4. Vorrichtung nach einem der vorhergehenden Ansprüche 2, 3, wobei
das erste Element (1) einen Schaft (1) mit manueller Steuerung (7) umfasst, der mit wenigstens einem ersten äußeren Gewindeabschnitt (9) und der Vielzahl von Kontaktabschnitten in Form von peripheren Abflachungen (5, 6) des Schafts selbst versehen ist,
das zweite Element (2) einen zylindrischen Körper umfasst, der mit wenigstens einem zweiten inneren Gewindeabschnitt (10) versehen ist, der eingeschraubt/ausgeschraubt werden kann und axial in Bezug auf den Schaft (1) gleiten kann,
das magnetische Element (3) einen magnetischen Block umfasst, der in Kontakt mit der Kontaktfläche (4) des Schafts (1) steht und in einem Gleitsitz (11) beweglich ist, der im zylindrischen Körper (2) vorgesehen ist.

5. Vorrichtung nach Anspruch 4, wobei der Schaft einen ersten Teil (71) in Form eines Hohlzylinders, der mit der Steuerung (7) fest verbunden ist und mit der Kontaktfläche (4) versehen ist, und einen zweiten Teil (77) in Form eines Schafts aufweist, der mit dem äußeren Gewindeabschnitt (9) versehen ist, wobei der erste Teil (71) und der zweite Teil (77) mittels einer Drehsperre gegeneinander verschiebbar sind, so dass eine Drehung der Steuerung (7) das Einschrauben/Ausschrauben des Gewindeabschnitts (9) bestimmt, aber die axiale Position der Steuerung (7) nicht ändert.

6. Vorrichtung nach einem der vorhergehenden Ansprüche, wobei die Verstellung der Manövriereinstellung (8) mit einer Rohrleitung (22) für den Durchgang einer Flüssigkeit verbunden ist, deren Nutzquerschnitt durch die von einem Ende (23) des Elements (1) eingenommene Position eingestellt wird.

7. Vorrichtung nach einem der vorhergehenden Ansprüche, wobei die Verstellung der Manövriereinstellung (8) mit der gegenseitigen Position verbunden ist, die durch das erste und das zweite Element (1, 2) eingenommen wird.

8. Hydraulischer Aktuator (13) für Fahrräder oder Motorräder, umfassend eine Vorrichtung gemäß Anspruch 6, wobei die Manövriereinstellung (8) einen einstellbaren manuellen Hebel (12) umfasst und wobei der Aktuator (13) einen Hauptkörper (16), der an einer Lenkstange (18) angebracht werden kann, und eine Hydraulikpumpe umfasst, die mit einem Hydraulikkolben (19) versehen ist, der operativ mit dem Hebel (12) verbunden ist.

9. Aktuator nach Anspruch 8, sofern abhängig von den Ansprüchen 4 oder 5, wobei:
der Hebel (12) ein verstellbarer Hebel ist, der drehbar um einen mit dem Hauptkörper (16) integral verbundenen Stift (15) eingespannt ist, um von einer anfänglichen Ruheposition in eine Betriebssteuerposition des Aktuators (13) zu gelangen, der Schaft (1) ein erstes Druckende (20), das mit axialer Einschränkung verbunden ist und sich frei mit dem Kolben (19) dreht, und ein zweites Steuerende (25) umfasst, das vorgesehen ist, um mit einem drehbaren Steuerknopf (26) in Eingriff gebracht zu werden,
der zylindrische Körper (2) einen zylindrischen Zylinder (24) umfasst, der von dem Schaft (1) durch eine Querbohrung (27) quer durchkreuzt wird und in einen zylindrischen Sitz (21) des Hebels (12) mit einer Achse parallel zur Drehachse des Stifts (15) eingesetzt ist.

10. Aktuator nach Anspruch 9, umfassend zwei Magnetblöcke (3), die in entsprechende Gleitsitze (11) eingesetzt sind, die sich in diametral entgegengesetzter Position in Bezug auf die Achse des Schafts befinden und mit entgegengesetzten Vorzeichen magnetisiert sind, um sich gegenseitig anzuziehen und im normalen Betrieb auf den Kontaktflächen (5, 6) des Schafts (1) ruhend zu verbleiben.

11. Aktuator nach Anspruch 9 oder 10, wobei der Hebel ein Bremshebel ist und wobei die Pumpe (19) eine Pumpe zum Betätigen einer hydraulischen Bremse ist.

## Revendications

1. Dispositif anti-dévissage d'un réglage de manoeuvre (8) manuel de bicyclettes ou motocyclettes associées fonctionnellement au dispositif, comprenant :
un premier élément (1) en accouplement fileté avec un deuxième élément (2) et en rotation par rapport à ce dernier avec un mouvement de vissage/dévissage en réponse à l'activation manuelle d'une commande (7) pour réaliser un mouvement de réglage dudit réglage de manoeuvre,
un élément stabilisant magnétique (3) associé audit premier (1) et deuxième élément (2), et mobile par rapport à ceux-ci,
**caractérisé en ce que** l'élément stabilisant magnétique (3) est normalement maintenu en contact par attraction magnétique contre une surface (4) du premier élément (1) dans une configuration de réglage stable du dispositif, tandis que pendant le vissage/dévissage dudit premier (1) et deuxième élément (2) du dispositif l'élément stabilisant magnétique (3) est forcé par ledit contact avec la surface (4) à se déplacer en opposition à ladite attraction magnétique contre le mouvement à la fois de vissage et de dévissage.

2. Dispositif selon la revendication 1, dans lequel ladite surface de contact (4) comprend une pluralité de portions de contact (5, 6) correspondant à des positions de réglage respectives du dispositif.

3. Dispositif selon la revendication 2, dans lequel pendant le mouvement de vissage/dévissage l'élément magnétique (3) passe par la suite en contact avec ladite pluralité de portions de contact (5, 6) réalisant ledit mouvement en opposition à l'attraction magnétique de manière à renvoyer une sensation tactile d'exécution du réglage à la commande (7).

4. Dispositif selon l'une quelconque des revendications précédentes 2, 3, dans lequel
ledit premier élément (1) comprend une tige (1) à commande manuelle (7) pourvue d'au moins une première portion extérieure filetée (9) et ladite pluralité de portions de contact sous forme d'aplatissements périphériques (5, 6) de la tige elle-même,
ledit deuxième élément (2) comprend un corps cylindrique pourvu d'au moins une deuxième portion intérieure filetée (10) pour être vissé/dévissé et coulisser axialement par rapport à la tige (1),
ledit élément magnétique (3) comprend un bloc magnétique en contact avec la surface de contact (4) de la tige (1) et mobile dans un siège coulissant (11) obtenu dans le corps cylindrique (2).

5. Dispositif selon la revendication 4, dans lequel ladite tige comprend une première partie (71) sous forme d'un cylindre creux formé d'une seule pièce avec la commande (7) et pourvu de la surface de contact (4) et une deuxième partie (77) est sous forme d'une tige pourvue de la portion extérieure filetée (9), lesdites première partie (71) et deuxième partie (77) pouvant coulisser mutuellement au moyen d'un accouplement à rotation entravée, de sorte qu'une rotation de la commande (7) détermine le vissage/dévissage de la portion filetée (9) mais ne modifie pas la position axiale de la commande (7).

6. Dispositif selon l'une quelconque des revendications précédentes, dans lequel le réglage dudit réglage de manoeuvre (8) est associé à une tuyauterie (22) pour le passage d'un fluide, dont la section utile est réglée par la position occupée par une extrémité (23) de l'élément (1).

7. Dispositif selon l'une quelconque des revendications précédentes, dans lequel le réglage dudit réglage de manoeuvre (8) est associé à la position mutuelle occupée par lesdits premier et deuxième éléments (1, 2).

8. Actionneur hydraulique (13) pour bicyclettes ou motocyclettes comprenant un dispositif selon la revendication 6, dans lequel ledit réglage de manoeuvre (8) comprend un levier manuel (12) réglable et l'actionneur (13) comprend un corps principal (16) pouvant être appliqué à un guidon (18) et une pompe hydraulique pourvue d'un piston hydraulique (19) associé fonctionnellement au levier (12).

9. Actionneur selon la revendication 8, lorsqu'elle dépend des revendications 4 ou 5, dans lequel :
ledit levier (12) est un levier réglable contraint de manière rotative autour d'une broche (15) formée d'une seule pièce avec le corps principal (16) pour passer d'une position de repos initiale et d'une position de commande de fonctionnement de l'actionneur (13),
ladite tige (1) comprend une première extrémité de poussée (20) reliée à une contrainte axiale et librement en rotation avec ledit piston (19) et une deuxième extrémité de commande (25) destinée à être en prise avec un bouton de commande rotatif (26),
ledit corps cylindrique (2) comprend un fût cylindrique (24) traversé transversalement par ladite tige (1) à travers un trou traversant (27) et inséré dans un siège cylindrique (21) du levier (12) de l'axe parallèle à l'axe de rotation de la broche (15).

10. Actionneur selon la revendication 9, comprenant deux blocs magnétiques (3) insérés dans des sièges coulissants (11) correspondants obtenus dans une position diamétralement opposée par rapport à l'axe de la tige et magnétisés avec des signes opposés afin de s'attirer l'un l'autre et de tenir normalement en reposant sur les surfaces de contact (5, 6) de la tige (1).

11. Actionneur selon la revendication 9 ou 10, dans lequel ledit levier est un levier de frein et ladite pompe (19) est une pompe pour actionner un frein hydraulique.
